# FASCICULE DE BREVET EUROPEEN

(11) **EP 2 088 346 B1**
(45) Date de publication et mention de la délivrance du brevet: **12.10.2011**
(21) Numéro de dépôt: 09151948.8
(22) Date de dépôt: 03.02.2009
(51) Int. Cl.: F16D 65/097

(54) **Guidage d'un support de plaquette de frein à disque**
Führung der Halterung eines Bremsklotzes von Scheibenbremsen
Guide for a disc brake pad support

(30) Priorité: 11.02.2008 FR 0800787
(43) Date de publication de la demande: 12.08.2009
(73) Titulaire: Robert Bosch GmbH, 70442 Stuttgart (DE)
(72) Inventeur: Boisseau, Jean-Pierre, 75014 PARIS (FR); Rossignol, Magali, 49630 CORNE (FR)
(74) Mandataire: Hurwic, Aleksander Wiktor

(56) Documents cités:
- GB-A- 2 109 065
- US-A1- 2005 115 779
- US-A1- 2006 260 884

## Description

L'invention concerne un dispositif à ressort pour dispositif de guidage de support de plaquette de frein à disque de véhicule et notamment un dispositif à ressort permettant de guider le déplacement d'un support de plaquette de frein dans l'étrier dans lequel il est placé. Il concerne également un patin de frein équipé d'un tel dispositif à ressort ainsi qu'un frein à disque équipé de patins de frein montés chacun dans un tel dispositif à ressort.

Dans un véhicule équipé de freins à disques, chaque roue qui doit être freinée par un système de freinage comporte un disque de freinage solidaire de la roue et un dispositif de freinage solidaire du châssis du véhicule qui vient par friction freiner le mouvement de rotation du disque. Le dispositif de freinage comporte, de chaque côté du disque de freinage, un patin de frein constitué d'un support de plaquette portant une plaquette de frein. Chaque patin de frein est mobile perpendiculairement au plan du disque (selon une direction que nous appellerons direction axiale) et est guidé par deux de ses extrémités appelées "oreilles" dans des logements d'une chape. Des organes de commande permettent d'exercer une pression sur les patins de freins selon la direction axiale. Les deux patins de freins disposés de part et d'autre d'un disque permettent donc, lors d'un freinage, d'enserrer le disque et de freiner sa rotation.

Lors d'un freinage, les patins de freins sont entraînés selon une direction tangentielle au disque et les oreilles viennent buter, parfois brutalement, contre le fond de leur logement de guidage provoquant un bruit appelé "klonk" ou claquement. Pour amortir le choc des oreilles dans leur logement et ainsi atténuer le bruit, il est prévu, de manière connue, un ressort situé entre chaque oreille et son logement. Cet effet d'amortissement est obtenu par déformation du ressort. La forme du ressort doit donc être adaptée à la force exercée par le patin de frein lors de son déplacement tangentiel. Cette force est fonction de la masse du patin et de sa vitesse d'entraînement. Le calibrage du ressort doit donc, en principe, tenir compte du type de véhicule et du type de patin.

Cependant, l'élasticité du ressort selon la direction tangentielle peut induire un bruit qui se révèle souvent être bruit aigu dans certaines conditions de fonctionnement notamment lors d'un freinage faible ou durant une marche arrière d'un véhicule.

L'invention permet donc de résoudre cet inconvénient.

Le document US 2006/0260884 A1 montre un ressort de guidage d'après le préambule de la revendication 1.

L'invention a donc pour objet un Ressort de guidage destiné à guider un patin de frein dans des logements d'une chape d'un frein à disque. Un patin de frein comprend généralement à deux de ses extrémités deux oreilles de montage et chaque oreille est montée dans un logement d'une chape du frein à disque par l'intermédiaire d'un ressort de guidage. Ce ressort de guidage permet le glissement de ladite oreille du patin dans ledit logement.

Le ressort de guidage comporte au moins un moyen élastique de rappel destiné à induire sur l'oreille du patin une force radiale tendant à plaquer cette oreille contre une face supérieure du logement, ladite force radiale étant découplée de toute force latérale pouvant être induite par ledit ressort de guidage sur l'oreille du patin.

Ledit ressort de guidage comporte une lame inférieure couplée mécaniquement à une lame latérale. Cette lame latérale est destinée à être en appui contre une face latérale d'un logement de la chape et plus précisément contre le fond du logement. La lame inférieure est destinée à exercer une force radiale vers le haut sur une oreille d'un patin et est destinée à ne pas bouger lorsqu'une oreille d'un patin placée dans ledit ressort de guidage se déplace latéralement.

Ledit ressort de guidage comporte une lame de glissement destinée à être plaquée selon toute sa surface, ou quasiment toute sa surface, contre le fond dudit logement même lorsque le patin de frein n'est pas commandé en actionnement de freinage.

Selon l'invention ledit ressort de guidage comporte:
- une lame inférieure destinée à être située entre la face inférieure du logement et la face inférieure de l'oreille du patin,
- un premier ressort situé entre ladite lame inférieure et la face inférieure du logement et tendant à écarter ladite lame inférieure de ladite face inférieure du logement,
- et un deuxième ressort situé entre ladite lame inférieure et la face inférieure de l'oreille du patin et tendant à écarter ladite face inférieure du patin de ladite lame inférieure.

Avantageusement, selon le système de l'invention, ladite lame inférieure dudit ressort de guidage, ledit premier ressort et ledit deuxième ressort sont en une même pièce.

L'invention prévoit également avantageusement que ledit premier ressort et ledit deuxième ressort sont des lames ressorts ou des languettes en acier.

Selon une variante de l'invention, ledit premier ressort et ledit deuxième ressort sont calibrés de telle façon que lorsque ledit ressort de guidage est monté dans un logement d'une chape et que l'oreille d'un patin de frein est placée dans ledit ressort de guidage, l'effort radial exercé par ledit premier ressort sur la face inférieure du logement de la chape est égal ou sensiblement égal à l'effort radial exercé par ledit deuxième ressort sur la face inférieure de l'oreille du patin.

Selon une variante de réalisation selon l'invention, en l'absence d'oreille de patin placée dans ledit ressort de guidage, la lame présente une légère cambrure et en ce que lorsqu'une oreille de patin est placée dans ledit ressort de guidage, la lame inférieure est poussée vers la face inférieure du logement de la chape et ladite cambrure est éliminée.

L'invention a également pour objet un patin de frein pour frein à disque dans lequel le patin de frein est équipé d'un Ressort de guidage ainsi décrit précédemment .

L'invention a également pour objet un frein à disque qui comporte de tels patins de freins équipés chacun d'un Ressort de guidage tel que précédemment décrit.

Les différents objets et caractéristiques de l'invention apparaîtront plus clairement dans la description qui va suivre ainsi que dans les figures annexées qui représentent:
- la figure 1, une vue de face d'un exemple de montage d'un patin de frein dans une chape d'un frein à disque selon une technique connue,
- la figure 2, une vue de face partielle d'un patin de frein et de son ressort de montage selon une technique connue,
- la figure 3, un patin de frein utilisant le système de montage de la figure 2,
- la figure 4, un exemple de réalisation général d'un système de montage d'un patin ne formant pas parti de l'invention,
- la figure 5, une vue de face d'un exemple de montage d'une oreille de patin selon une technique connue dans la technique,
- la figure 6a, un exemple schématique d'un dispositif à ressort selon l'invention,
- la figure 6b, un ressort tel que celui de la figure 6a monté dans un logement d'une chape,
- la figure 6c, un exemple de dispositif de montage à ressort selon l'invention utilisant le dispositif à ressort de la figure 6a,
- la figure 7a, une vue en perspective d'un exemple de réalisation plus complet du dispositif de montage selon l'invention,
- les figures 7b et 7c, des exemples de réalisation de ressorts selon l'invention,
- la figure 8a, une vue en perspective d'une variante de réalisation du ressort selon l'invention,
- la figure 8b, une vue de face du d'une oreille de patin de frein équipée du ressort de la figure 8a.

### DESCRIPTION DETAILLEE

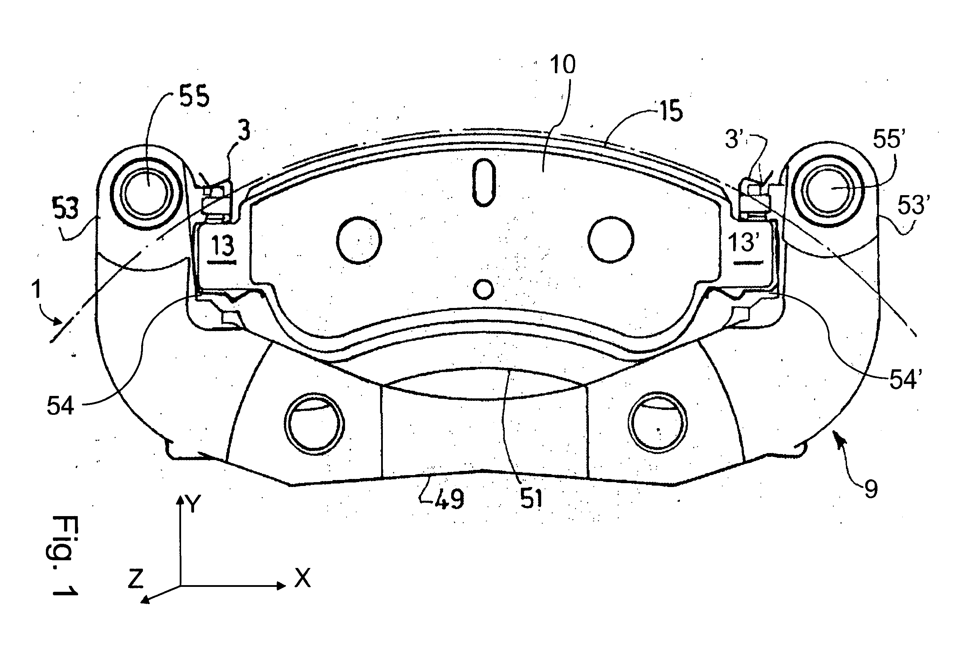

En se reportant à la figure 1, on va donc tout d'abord décrire un système de montage d'un patin de frein dans une chape d'un frein à disque tel que connu dans la technique.

Dans la description qui va suivre on désignera par:
- "radial", un élément situé selon l'axe radial du système (l'axe Y sur la figure 1),
- "latéral", un élément situé selon un axe parallèle à une tangente au disque 1 (l'axe X sur la figure 1),
- "axial", un élément situé selon un axe perpendiculaire au plan du disque 1 (l'axe Z sur la figure 1). XYZ figures

La chape 9 comporte deux bras 49 et 51 disposés de part et d'autre d'un disque 1 (représenté en trait mixte sur la figure 1). Ces deux bras sont reliés par deux pontets 53 et 53' s'étendant axialement et disposés radialement au-delà du disque 1.

Chaque bras possède à ses extrémités des logements 54 et 54' dans lesquelles sont placées les oreilles d'extrémités 13 et 13' d'un patin de frein 10.

De plus, les pontets comportent des ouvertures 55 et 55' pour la réception des tiges ou colonnettes de guidages d'un étrier (non représenté). Cet étrier est destiné à porter des moyens permettant d'appliquer des forces de directions axiales aux patins de freins.

Les oreilles d'extrémités 13 et 13' du patin 10 sont montées dans les logements 54 et 54' à l'aide de ressorts 3 et 3'. Les oreilles 13 et 13' coulissent axialement dans les ressorts 3 et 3'.

On trouvera une description d'un tel système de montage des patins de freins dans le brevet d'invention FR-2 800 140.

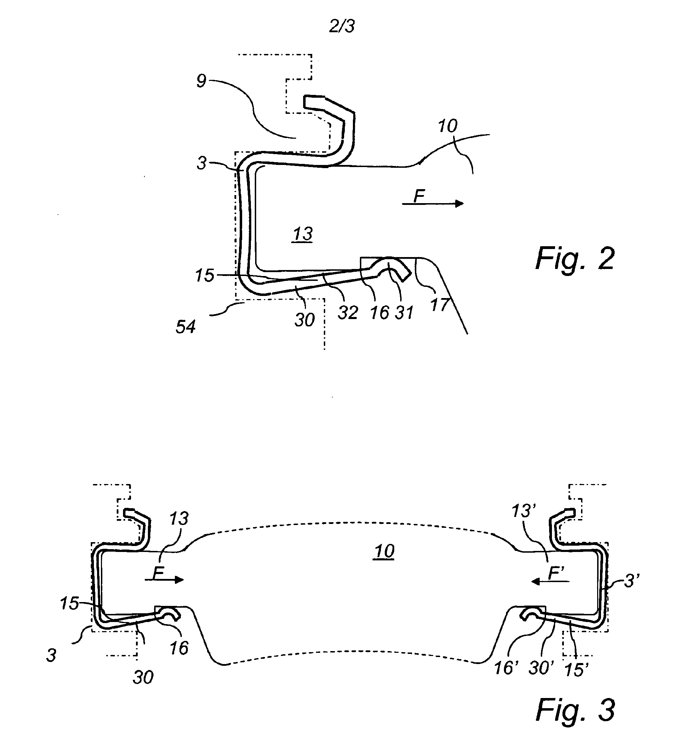

Le rôle des ressorts 3 et 3' est d'assurer le guidage avec des frottements faibles et d'amortir les chocs des oreilles des patins contre le fond des logements 54 et 54' lorsque les patins sont entraînés par le disque 1 durant un freinage. Cet amortissement est obtenu par la déformation des ressorts lorsqu'ils sont écrasés sous l'effet de la force des patins. Par exemple, comme cela est représenté sur la figure 2, la partie du ressort 3, sur laquelle vient s'appuyer l'extrémité de l'oreille du patin, est cambrée.

Il convient d'adapter la charge du ressort pour qu'il puisse remplir son rôle.

Sur la figure 2, la chape 9 a été dessinée en trait mixte, l'oreille 13 du patin 10 a été dessinée en trait continu fin et le ressort 3 a été dessiné en trait continu épais.

La patte 30 du ressort 3 exerce une pression sur la face 17 de l'oreille 13 du patin induisant un frottement qui freine le déplacement tangentiel du patin.

La figure 3 représente un patin de frein monté sur une chape. Les deux oreilles du patin sont munies de ressorts tel que celui de la figure 2.

Cependant, dans ce type de système, à freinage faible et notamment lors d'un freinage en marche arrière, la courbure de la partie cambrée du ressort 3 n'est pas complètement écrasée et l'oreille du patin glisse contre un élément relativement souple et non sur une surface stable. Il se produit donc souvent un bruit aigu.

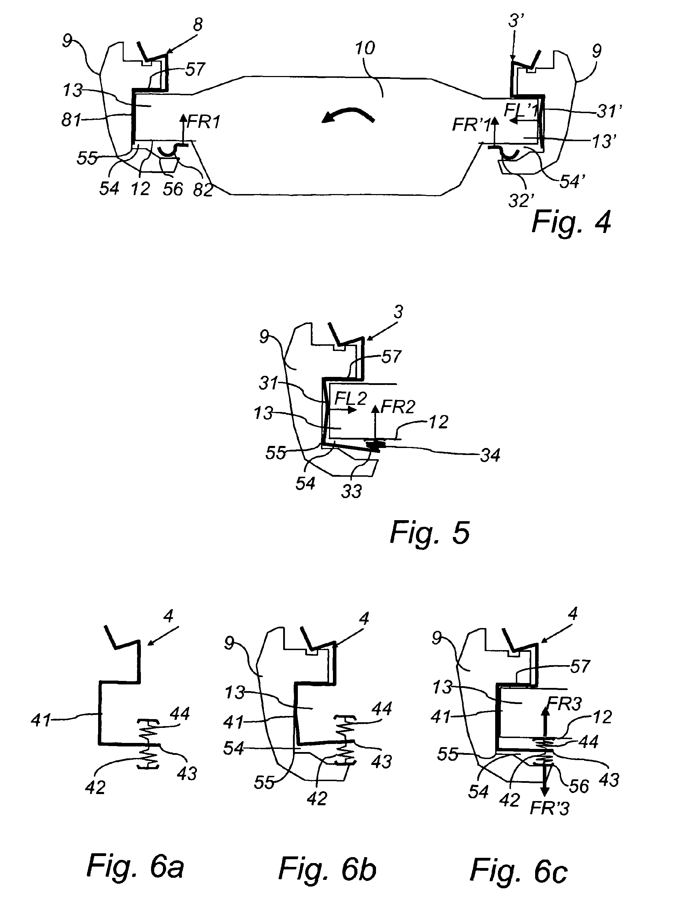

En se reportant à la figure 4, on va décrire un exemple de réalisation d'un dispositif de montage à ressort d'une oreille de patin de frein ne formant pas parti de l'invention.

Les éléments de la figure 4 portent les mêmes références que les éléments des figures 1 à 3 qui assurent les mêmes fonctions. Il en sera de même dans les autres figures annexées à cette description.

Dans l'exemple de réalisation de la figure 4, l'oreille de droite 13' du patin de frein est montée dans le logement 54' de la chape 9 à l'aide d'un ressort 3' qui est de même type que les ressorts de types connus tels que les ressorts des figures 1 à 3

Lors d'un freinage, par exemple lors d'un freinage en marche arrière, le patin de frein est supposé se déplacer vers la gauche sous l'effet d'un entraînement par le disque de freinage.

Le dispositif à ressort 8 comporte une lame de glissement 81 qui est plaquée par l'oreille 13 du patin contre la face 55 du fond du logement 54. Avantageusement, on peut prévoir que cette lame de glissement 81, du fait de sa forme, par exemple plate dans le cas illustré d'oreilles "carrées", n'a pas d'effet ressort qui tendrait à exercer une force vers la droite sur l'oreille 13 du patin.

Par ailleurs, le dispositif à ressort 8 comporte un ressort 82 qui s'appuie sur la face inférieure 56 du logement 54 et qui exerce une force radiale FR1 vers le haut sur la face inférieure 12 de l'oreille 13. L'oreille du patin est poussée vers le haut, vers la face supérieure 57 du logement 54.

La force radiale FR1 exercée par ce ressort 82 n'a pas de répercussion sur le comportement de la lame de glissement 81.

Avantageusement, ce ressort 82 est relié mécaniquement au dispositif à ressort 8 sans pour autant qu'il y ait une transmission de l'effort FR1 sur la lame 81.

En se reportant à la figure 5, on va maintenant expliciter plus clairement la différence du dispositif à ressort selon l'invention par rapport aux dispositifs connus.

La figure 5 représente un dispositif à ressort 3 de type connu qui comporte une lame ressort 31 de fond de logement et une lame 33 qui exerce un effort radial FR2 vers le haut sur la face inférieure du patin par l'intermédiaire d'un ressort 34.

La lame de fond de logement 31 est cambrée. Lorsque l'oreille de patin 13 est placée dans le dispositif à ressort 3, la lame 33 tend à être repoussée vers le bas et tend à cambrer la lame 31 ou à accentuer la cambrure de la lame 31 si celle-ci possède déjà une cambrure. Lorsque l'oreille de patin 13 se déplace vers la gauche en raison d'un freinage, l'extrémité de gauche de l'oreille 13 reçoit un effort latéral FL2, et qui plus est, un effort latéral variable en raison de l'élasticité de la lame 31. Un effort radial FR2 est également exercé vers le haut sur la face inférieure de l'oreille par le ressort 34 pour plaquer l'oreille contre la face 57 du logement 54.

L'objet de l'invention est donc de supprimer tout au moins de minimiser l'effort latéral FL2 exercé sur l'oreille de patin par le dispositif à ressort et d'éviter qu'une déformation ou un mouvement de la lame inférieure du dispositif à ressort ait une incidence sur la lame 31.

En se reportant aux figures 6a à 6c, on va décrire plus en détails un exemple de réalisation selon l'invention.

La figure 6a représente un dispositif à ressort 4 qui comporte une lame de glissement 41 destinée à être placée dans le fond 55 d'un logement d'une chape ainsi qu'une lame inférieure 43 munie d'un ressort 42 destinée à prendre appui sur la face inférieure 56 du logement de la chape et un ressort 44 destiné à exercer un effort vers le haut sur la face inférieure 12 d'une oreille de patin.

La figure 6b représente un dispositif à ressort tel que celui de la figure 6a monté dans le logement 54 de la chape 9. A titre d'exemple, la lame de glissement 41 possède une légèrement courbure telle que, en l'absence d'une oreille de patin, la lame inférieure 43 est légèrement écartée du fond 55 du logement 54.

La figure 6c représente l'oreille de patin 13 montée dans le logement 54 de la chape par l'intermédiaire du dispositif à ressort. En raison de la mise en place de l'oreille 13 dans le dispositif à ressort 4, la lame 43 est poussée vers le bas et la légère courbure de la lame 41 est légèrement redressée de telle façon que la totalité ou la quasi-totalité de la lame 41 est plaquée contre le fond 55 du logement 54. Aucun effort latéral n'est exercé par la lame 41 sur l'oreille 13 du patin.

Le ressort 42 prend appui sur la face inférieure 56 du logement 54 et le ressort 44 exerce un effort radial FR3 vers le haut sur la face inférieure 12 du patin 13 pour pousser l'oreille du patin vers la face supérieure 57 du logement de la chape.

Avantageusement, l'effort radial FR3 est égal ou sensiblement égal à l'effort radial FR'3 exercé par le ressort 42 sur la face inférieure du logement 54.

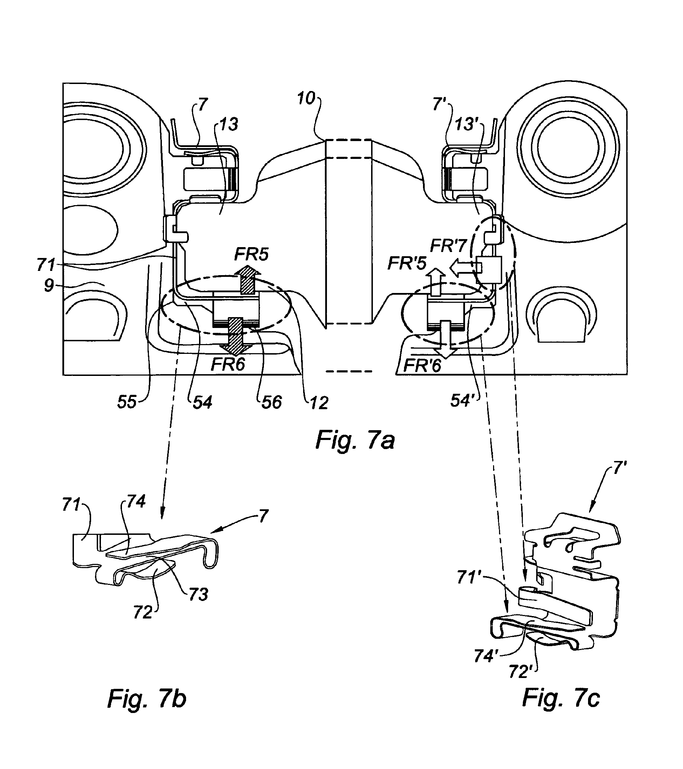

Les figures 7a à 7c représentent un exemple de réalisation détaillé d'une variante de réalisation d'un patin de frein équipé d'un dispositif à ressort selon l'invention.

L'oreille de droite 13' du patin est montée dans le logement 54' de la chape par l'intermédiaire d'un dispositif à ressort 7' qui est muni d'un premier ressort 71' permettant d'exercer un effort latéral FR'7 vers la gauche sur l'oreille 13' et de deux ressorts 72' et 74' permettant respectivement de prendre appui sur la face inférieure du logement 54' (effort radial FR'6) et d'exercer un effort radial FR'5 vers le haut sur la face inférieure de l'oreille 13'.

A titre d'exemple, le jeu entre la face de droite de l'oreille 13' et le fond du logement 54' est comprise entre 0,285 et 0,895 millimètres.

La figure 7c représente plus en détails, à titre d'exemple, le dispositif à ressort 7' de la figure 7a et fait à apparaître les positions des différents ressorts 71', 72' et 74'.

L'oreille de gauche 13 du patin est montée dans le logement 54 de la chape à l'aide d'un dispositif à ressort 7 selon l'invention.

Ce dispositif 7 comporte une lame 71 qui est plaquée contre le fond 55 du logement 54 et qui n'exerce pas d'effort latéral sur l'oreille du patin. Entre la face inférieure 12 de l'oreille 13 et la face inférieure 56 du logement 54, le dispositif 7 possède une lame 73

(figure 7b) qui est reliée à la lame 71 et qui est équipée de deux ressorts 72 et 74. Le ressort 72 prend appui sur la face inférieure 56 du logement 54 et exerce un effort radial FR6 sur cette face. Le ressort 74 exerce un effort radial FR5 vers le haut sur l'oreille du patin.

La figure 7b représente un exemple de réalisation du dispositif à ressort 7 et fait apparaître les ressorts 72 et 74 situés de part et d'autre de la lame 73.

Avantageusement, les ressorts 72 et 74 sont réalisés sous forme de lames ressorts.

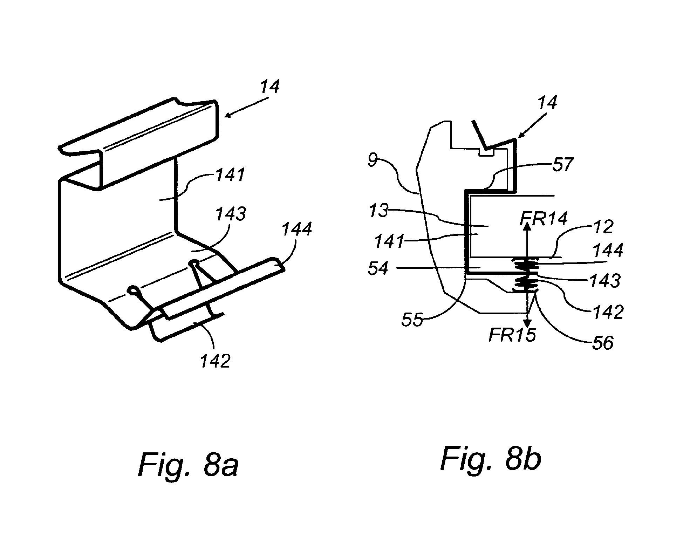

La figure 8a représente une variante de réalisation du dispositif à ressort selon l'invention. Le dispositif 14 comporte une lame de glissement 141 et une lame inférieure 143 munie d'une lame ressort 142 destinée à prendre appui sur une face inférieure 56 d'un logement de chape ainsi que d'une lame ressort 144 destinée à exercer un effort radial sur la face inférieure 12 d'une oreille de patin.

La figure 8b représente le dispositif à ressort monté dans un logement 54 d'une chape avec une oreille de patin 13 placée dans le dispositif 14.

Les ressorts 142 et 143 exercent donc des efforts radiaux FR14 et FR15 respectivement sur l'oreille de patin et sur la face inférieure du logement. De plus, la lame 141 n'exerce pas d'effort latéral sur l'oreille de patin.

Il est bien entendu que la présente invention n'est pas limitée aux patins à oreilles carrées mais s'applique à tout type de patins de freins à disque notamment aux patins à oreilles rondes.

Le ressort selon l'invention est avantageusement réalisé en acier, tel que par exemple un acier inoxydable ou un acier à ressort.

## Revendications

1. Ressort de guidage d'un patin de frein dans des logements d'une chape d'un frein à disque, ledit patin de frein comprenant à deux de ses extrémités deux oreilles de montage (13, 13') et chaque oreille étant montée dans un logement (54, 54') d'une chape (9) du frein à disque par l'intermédiaire d'un ressort de guidage (3, 4, 7, 8, 14), lequel assure le guidage du glissement de ladite oreille du patin dans ledit logement (54, 54'), ledit ressort de guidage (3, 4, 7, 8, 14) comportant au moins un moyen élastique de rappel (82, 44, 74, 144) destiné à induire sur l'oreille du patin (13) une force radiale (FR3, FR5, FR14) tendant à plaquer cette oreille contre une face supérieure (57) du logement (54), ladite force radiale (FR3, FR5, FR14) étant découplée de toute force latérale pouvant être induite par ledit ressort de guidage sur l'oreille du patin, ledit ressort de guidage (4, 7, 14) comportant une lame inférieure (43, 73, 143) couplée mécaniquement à une lame latérale (41, 71 141) qui est destinée à être en appui contre une face latérale (55) d'un logement (54) de la chape, ladite lame inférieure exerçant une force radiale (FR3, FR5, FR14) vers le haut sur une oreille d'un patin et étant destinée à ne pas bouger lorsqu'une oreille d'un patin placée dans ledit ressort de guidage se déplace latéralement, ledit ressort de guidage (4, 7, 14) comportant une lame de glissement (41, 71, 141) destinée à être plaquée selon toute sa surface ou quasiment toute sa surface contre le fond (55) dudit logement même lorsque le patin de frein n'est pas commandé en actionnement de freinage, **caractérisé en ce que** ledit ressort de guidage comporte :
- une lame inférieure (43, 73, 143) destinée à être située entre la face inférieure (56) du logement (54) et la face inférieure (12) de l'oreille 13 du patin,
- un premier ressort (42, 72, 142) situé entre ladite lame inférieure (43, 73, 143) et la face inférieure (56) du logement et tendant à écarter ladite lame inférieure de ladite face inférieure du logement,
- et un deuxième ressort (44, 74, 144) situé entre ladite lame inférieure (43, 73, 143) et la face inférieure (12) de l'oreille du patin et tendant à écarter ladite face inférieure du patin de ladite lame inférieure.

2. Ressort de guidage selon la revendication 1, **caractérisé en ce que** ladite lame inférieure (43, 73, 143) dudit ressort de guidage, ledit premier ressort (42, 72, 142) et ledit deuxième ressort (44, 74, 144) sont en une même pièce.

3. Ressort de guidage selon la revendication 2, **caractérisé en ce que** ledit premier ressort (42, 72, 142) et ledit deuxième ressort (44, 74, 144) sont des lames ressorts ou des languettes en acier.

4. Ressort de guidage selon la revendication 1, **caractérisé en ce que** ledit premier ressort (42, 72, 142) et ledit deuxième ressort (44, 74, 144) sont calibrés de telle façon que lorsque le ressort de guidage est monté dans un logement d'une chape et que l'oreille d'un patin de frein est placée dans le ressort de guidage, l'effort radial (FR'3, FR6, FR15) exercé par ledit premier ressort (42, 72, 142) sur la face inférieure (56) du logement de la chape est égal ou sensiblement égal à l'effort radial (FR3, FR5, FR15) exercé par ledit deuxième ressort (44, 74, 144) sur la face inférieure (12) de l'oreille du patin.

5. Ressort de guidage selon la revendication 1, **caractérisé en ce qu'**en l'absence d'oreille de patin placée dans ledit ressort de guidage, la lame (41, 71, 141) présente une légère cambrure et **en ce que** lorsqu'une oreille de patin est placée dans ledit ressort de guidage, la lame inférieure (43, 73, 143) est poussée vers la face inférieure (56) du logement (54) de la chape et ladite cambrure est éliminée.

6. Patin de frein pour frein à disque **caractérisé en ce qu'**il est équipé d'un ressort de guidage selon l'une quelconque des revendications précédentes.

7. Frein à disque **caractérisé en ce qu'**il comporte des patins de freins selon la revendication 6 équipés chacun d'un ressort de guidage selon l'une quelconque des revendications 1 à 5.

## Claims

1. Guide spring for guiding a brake pad in housings of a disc brake yoke, the said brake pad comprising at two of its ends two mounting ears (13, 13') and each ear being mounted in a housing (54, 54') of a disc brake yoke (9) by means of a guide spring (3, 4, 7, 8, 14), which guides the sliding of the said pad ear in the said housing (54, 54'), the said guide spring (3, 4, 7, 8, 14) comprising at least one elastic return means (82, 44, 74, 144) designed to induce on the pad ear (13) a radial force (FR3, FR5, FR14) tending to press this ear against an upper face (57) of the housing (54), the said radial force (FR3, FR5, FR14) being decoupled from any lateral force that may be induced by the said guide spring on the pad ear, the said guide spring (4, 7, 14) comprising a bottom leaf (43, 73, 143) mechanically coupled to a side leaf (41, 71, 141) which is designed to be resting against a side face (55) of a housing (54) of the yoke, the said bottom leaf exerting a radial force (FR3, FR5, FR14) upwards onto an ear of a pad and being designed not to move when an ear of a pad placed in the said guide spring moves sideways, the said guide spring (4, 7, 14) comprising a sliding leaf (41, 71, 141) designed to be pressed over the whole of its surface or virtually the whole of its surface against the bottom (55) of the said housing even when the brake pad is not controlled in braking actuation, **characterized in that** the said guide spring comprises:
- a bottom leaf (43, 73, 143) designed to be situated between the bottom face (56) of the housing (54) and the bottom face (12) of the ear (13) of the pad,
- a first spring (42, 72, 142) situated between the said bottom leaf (43, 73, 143) and the bottom face (56) of the housing and tending to move the said bottom leaf away from the said bottom face of the housing,
- and a second spring (44, 74, 144) situated between the said bottom leaf (43, 73, 143) and the bottom face (12) of the ear of the pad and tending to move the said bottom face of the pad away from the said bottom leaf.

2. Guide spring according to Claim 1, **characterized in that** the said bottom leaf (43, 73, 143) of the said guide spring, the said first spring (42, 72, 142) and the said second spring (44, 74, 144) are made in a single piece.

3. Guide spring according to Claim 2, **characterized in that** the said first spring (42, 72, 142) and the said second spring (44, 74, 144) are spring leaves or tongues made of steel.

4. Guide spring according to Claim 1, **characterized in that** the said first spring (42, 72, 142) and the said second spring (44, 74, 144) are calibrated so that, when the guide spring is mounted in a housing of a yoke and the ear of a brake pad is placed in the guide spring, the radial force (FR'3, FR6, FR15) exerted by the said first spring (42, 72, 142) on the bottom face (56) of the housing of the yoke is equal to or substantially equal to the radial force (FR3, FR5, FR15) exerted by the second spring (44, 74, 144) on the bottom face (12) of the ear of the pad.

5. Guide spring according to Claim 1, **characterized in that**, in the absence of a pad ear placed in the said guide spring, the leaf (41, 71, 141) has a slight curvature and **in that**, when a pad ear is placed in the said guide spring, the bottom leaf (43, 73, 143) is pushed towards the bottom face (56) of the housing (54) of the yoke and the said curvature is eliminated.

6. Brake pad for disc brake, **characterized in that** it is fitted with a guide spring according to any one of the preceding claims.

7. Disc brake, **characterized in that** it comprises brake pads according to Claim 6 each fitted with a guide spring according to any one of Claims 1 to 5.

## Patentansprüche

1. Führungsfeder eines Bremsbelagträgers in Aufnahmen eines Gabelkopfs einer Scheibenbremse, wobei der Bremsbelagträger an zwei seiner Enden zwei Montagelappen (13, 13') enthält, und jeder Lappen in eine Aufnahme (54, 54') eines Gabelkopfes (9) der Scheibenbremse über eine Führungsfeder (3, 4, 7, 8, 14) montiert ist, die die Führung des Gleitens des Lappens des Bremsbelagträgers in der Aufnahme (54, 54') gewährleistet, wobei die Führungsfeder (3, 4, 7, 8, 14) mindestens eine elastische Rückstelleinrichtung (82, 44, 74, 144) aufweist, die dazu bestimmt ist, auf den Lappen (13) des Bremsbelagträgers eine radiale Kraft (FR3, FR5, FR14) zu induzieren, die dahin tendiert, diesen Lappen gegen eine Oberseite (57) der Aufnahme (54) zu drücken, wobei die radiale Kraft (FR3, FR5, FR14) von jeder seitlichen Kraft abgekoppelt ist, die von der Führungsfeder auf den Lappen des Bremsbelagträgers induziert werden kann, wobei die Führungsfeder (4, 7, 14) ein unteres Blatt (43, 73, 143) aufweist, das mechanisch mit einem seitlichen Blatt (41, 71, 141) gekoppelt ist, welches dazu bestimmt ist, gegen eine Seitenfläche (55) einer Aufnahme (54) des Gabelkopfs in Auflage zu sein, wobei das untere Blatt eine radiale Kraft (FR3, FR5, FR14) nach oben auf einen Lappen eines Bremsbelagträgers ausübt und dazu bestimmt ist, sich nicht zu bewegen, wenn ein Lappen eines Bremsbelagträgers, der in der Führungsfeder angeordnet ist, sich seitlich verschiebt, wobei die Führungsfeder (4, 7, 14) ein Gleitblatt (41, 71, 141) aufweist, das dazu bestimmt ist, gemäß seiner ganzen Fläche oder praktisch seiner ganzen Fläche gegen den Boden (55) der Aufnahme gedrückt zu werden, selbst wenn der Bremsbelagträger nicht betätigt wird, **dadurch gekennzeichnet, dass** die Führungsfeder aufweist:
- ein unteres Blatt (43, 73, 143), das dazu bestimmt ist, sich zwischen der Unterseite (56) der Aufnahme (54) und der Unterseite (12) des Lappens (13) des Bremsbelagträgers zu befinden,
- eine erste Feder (42, 72, 142), die sich zwischen dem unteren Blatt (43, 73, 143) und der Unterseite (56) der Aufnahme befindet und dahin tendiert, das untere Blatt von der Unterseite der Aufnahme zu entfernen,
- und eine zweite Feder (44, 74, 144), die sich zwischen dem unteren Blatt (43, 73, 143) und der Unterseite (12) des Lappens des Bremsbelagträgers befindet und dahin tendiert, die Unterseite des Bremsbelagträgers von dem unteren Blatt zu entfernen.

2. Führungsfeder nach Anspruch 1, **dadurch gekennzeichnet, dass** das untere Blatt (43, 73, 143) der Führungsfeder, die erste Feder (42, 72, 142) und die zweite Feder (44, 74, 144) aus einem Stück sind.

3. Führungsfeder nach Anspruch 2, **dadurch gekennzeichnet, dass** die erste Feder (42, 72, 142) und die zweite Feder (44, 74, 144) Blattfedern oder Stahlzungen sind.

4. Führungsfeder nach Anspruch 1, **dadurch gekennzeichnet, dass** die erste Feder (42, 72, 142) und die zweite Feder (44, 74, 144) so kalibriert sind, dass, wenn die Führungsfeder in eine Aufnahme eines Gabelkopfs montiert und der Lappen eines Bremsbelagträgers in der Führungsfeder angeordnet ist, die von der ersten Feder (42, 72, 142) auf die Unterseite (56) der Aufnahme des Gabelkopfs ausgeübte radiale Kraft (FR'3, FR6, FR15) gleich oder im Wesentlichen gleich der von der zweiten Feder (44, 74, 144) auf die Unterseite (12) des Lappens des Bremsbelagträgers ausgeübten radialen Kraft (FR3, FR5, FE15) ist.

5. Führungsfeder nach Anspruch 1, **dadurch gekennzeichnet, dass** in Abwesenheit eines in der Führungsfeder angeordneten Bremsbelagträger-Lappens das Blatt (41, 71, 141) eine leichte Wölbung aufweist, und dass, wenn ein Bremsbelagträger-Lappen in der Führungsfeder angeordnet ist, das untere Blatt (43, 73, 143) zur Unterseite (56) der Aufnahme (54) des Gabelkopfs gedrückt und die Wölbung beseitigt wird.

6. Bremsbelagträger für eine Scheibenbremse, **dadurch gekennzeichnet, dass** er mit einer Führungsfeder nach einem der vorhergehenden Ansprüche ausgestattet ist.

7. Scheibenbremse, **dadurch gekennzeichnet, dass** sie Bremsbelagträger nach Anspruch 6 aufweist, die je mit einer Führungsfeder nach einem der Ansprüche 1 bis 5 ausgestattet sind.
